(19) Europäisches Patentamt
European Patent Office
Office européen des brevets

(11) Veröffentlichungsnummer: **0 008 403**
**B1**

(12) # EUROPÄISCHE PATENTSCHRIFT

(45) Veröffentlichungstag der Patentschrift: **04.11.81**

(51) Int. Cl.³: **C 08 F 246/00,** C 08 L 57/04

(21) Anmeldenummer: **79102839.2**

(22) Anmeldetag: **07.08.79**

(54) **Polymerisate, die primäre aliphatische Carbonamid- und/oder N-Methylolderivate der Carbonamidgruppen enthalten sowie ihre Herstellung und Verwendung.**

(30) Priorität: **09.08.78 DE 2834777**

(43) Veröffentlichungstag der Anmeldung: **05.03.80 Patentblatt 80/5**

(45) Bekanntmachung des Hinweises auf die Patenterteilung: **04.11.81 Patentblatt 81/44**

(84) Benannte Vertragsstaaten: **AT BE CH DE FR GB IT NL SE**

(56) Entgegenhaltungen:
**DE-A-2 501 628**
**US-A-2 496 275**
**Henrici-Olivé/S-Olivé**
**POLYMERISATION-Kapitel 1.10**
**Seiten 65—69, Verlag Chemie 1969**

(73) Patentinhaber: **Consortium für elektrochemische Industrie GmbH, Zielstattstrasse 20, D-8000 München 70 (DE)**

(72) Erfinder: **Marquardt, Klaus, Dr. Dipl.-Chem., Unghauserstrasse 39, D-8263 Burghausen (DE)**
Erfinder: **Staudinger, Günther, Adlzreiterstrasse 14, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Polymerisate, die primäre aliphatische Carbonamid- und/oder N-Methylolderivate der Carbonamidgruppen enthalten sowie ihre Herstellung und Verwendung

Die Erfindung betrifft neue Polymerisate, deren Herstellung und Verwendung.

Zweck der Erfindung ist es, Polymerisate mit vorteilhaften Vernetzungssystemen aufzuzeigen.

Der Erfindung lag die Aufgabe zugrunde, Polymerisate herzustellen, die die Reaktivität primärer aliphatischer Carbonamide und/oder primärer aliphatischer N-Methylolcarbonamide aufweisen und darüber hinaus noch weitere reaktionsfähige Gruppen enthalten können.

Gegenstand der Erfindung sind Copolymerisate, bestehend aus Monomereinheiten, wie sie durch radikalische Polymerisation von mindestens einem Monomeren aus der Gruppe Olefine, wie Äthylen und Propylen, Acrylsäure, Methacrylsäure sowie deren Ester mit Alkylresten mit bis zu 8 Kohlenstoffatomen, deren Amide oder Nitrile, Styrol sowie substituierte Styrole, Vinylester von Alkylcarbonsäuren mit 1 bis 18 Kohlenstoffatomen, insbesondere Vinylacetat, Vinylhalogenide, insbesondere Vinylchlorid, N-Vinylpyrrolidon, N-Vinylpyridine, Crotonsäure und deren Derivate, wie Ester oder Amide, Vinylidenchlorid, Malein-, Fumar- und Itakonsäure und deren Derivate, wie z. B. Anhydride, Halbester, Ester, Halbamide, Amide, Salze, Vinyläther und Vinylketone erhalten werden, und dadurch gekennzeichnet sind, daß sie Struktureinheiten der allgemeinen Formel I

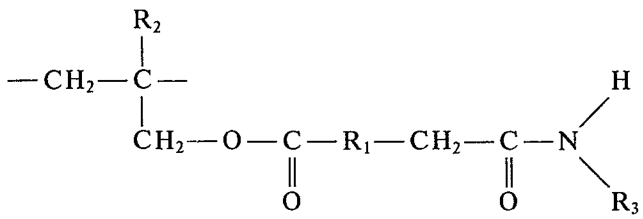

enthalten, worin $R_1$ ein geradkettiger oder verzweigter aliphatischer Kohlenwasserstoffrest mit einer Kohlenstoffzahl von 0 bis 9, $R_2$ Wasserstoff oder ein Methylrest und $R_3$ Wasserstoff oder eine $-CH_2OH$-Gruppe ist und Molekulargewichte zwischen $10^3$ und $10^6$, vorzugsweise $10^4$ bis $10^5$ aufweisen. Die durch die allgemeine Formel I gekennzeichneten Einheiten sind in den Polymerisaten in Mengen zwischen 1 und 50 Gew.-%, vorzugsweise zwischen 5 und 20 Gew.-% enthalten.

Ein weiterer Gegenstand der Erfindung ist ein Verfahren zur Herstellung von Polymerisaten nach Anspruch 1 und 2 durch radikalische Polymerisation nach den bekannten Verfahren der Masse-, Lösungs-, Fällungs- oder Dispersionspolymerisation bei Temperaturen zwischen 0 und 150° C, dadurch gekennzeichnet, daß Verbindungen der allgemeinen Formel II

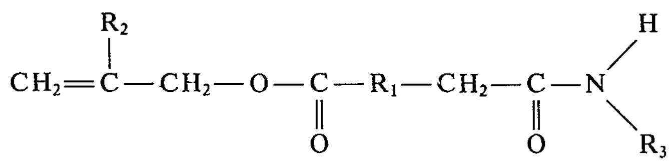

worin $R_1$ ein geradkettiger oder verzweigter aliphatischer Kohlenwasserstoffrest mit einer Kohlenstoffzahl zwischen 0 und 9, $R_2$ Wasserstoff oder ein Methylrest und $R_3$ Wasserstoff oder eine $-CH_2OH$-Gruppe ist mit mindestens einem weiteren olefinisch ungesättigten Monomeren copolymerisiert werden.

Die erfindungsgemäßen Copolymeren eignen sich zur Verwendung als Überzugsmassen, Lacke, Klebstoffe, Textilausrüstung, Dichtungsmassen und zur Herstellung von Formteilen.

Die erfindungsgemäßen Copolymeren lassen sich, wenn $R_3$ beispielsweise als Methylolgruppe vorliegt, durch Zusatz von starken Säuren, wie z. B. p-Toluolsulfonsäure und/oder durch Erhitzen, ggf. unter Druck, in der für N-Methylolgruppen enthaltende Polymere bekannten Weise vernetzen. Eine Vernetzung kann jedoch auch durch Zugabe von Formaldehydmelaminkondensat, wie z. B. Hexamethoxymethylmelamin oder Formaldehydharnstoffkondensaten, wie z. B. Dimethylolharnstoff, unter den für die N-Methylolverbindungen genannten Bedingungen erreicht werden. Die vernetzten Copolymerisate zeichnen sich durch hohen Vernetzungsgrad und ausgezeichnete Lösungsmittelbeständigkeit aus.

Beispiele für ungesättigte Verbindungen der allgemeinen Formel II sind die Allyl- und Methallylester der Malonamidsäure, Succinamidsäure, Glutaramidsäure, Adipinamidsäure, Pimelinamidsäure, Suberinamidsäure, Sebacinamidsäure oder Dodecanamidsäure, sowie ihre N-Methylolderivate, wie z. B. N-Methyloladipinamidsäureallylester.

Die Verbindungen der allgemeinen Formel II können hergestellt werden, indem man z. B. aus den Monoallyl- oder Monomethallylestern der entsprechenden Dicarbonsäuren mit Thionylchlorid das Säurechlorid und anschließend mit überschüssigem Ammoniak das Carbonsäureamid darstellt. Es ist

aber auch möglich, cyclische Dicarbonsäureimide mit Allylalkohol und einem geeigneten Katalysator, wie z. B. $Ca(OH)_2$, direkt in die entsprechenden Carbonamidsäureallylester zu überführen. Die Carbonamidsäureallylester können anschließend mit Formaldehyd und einer geeigneten Katalysatorbase zur Methylolverbindung umgesetzt werden.

Polymerisate, in denen die Gruppe $R_3$ eine Methylolgruppe ist, können auch dadurch hergestellt werden, daß man Verbindungen der allgemeinen Formel II, in der $R_3$ Wasserstoff bedeutet, zusammen mit anderen olefinisch ungesättigten Monomeren polymerisiert und das Polymerisat anschließend in einem geeigneten Lösungsmittel mit Formaldehyd zur Methylolverbindung umsetzt.

Die erfindungsgemäßen Copolymeren können aus allen polymerisierbaren Monomereinheiten aufgebaut sein. Geeignete olefinisch ungesättigte Comonomere sind beispielsweise Monomere aus der Gruppe Olefine, wie Äthylen, Propylen, Acrylsäure, Methacrylsäure sowie deren Ester mit Alkylresten mit bis zu 8 Kohlenstoffatomen, deren Amide oder Nitrile, Styrol sowie substituierte Styrole, Vinylester von Alkylcarbonsäuren mit 1 bis 18 Kohlenstoffatomen, insbesondere Vinylacetat, Vinylhalogenide, insbesondere Vinylchlorid, N-Vinylpyrrolidon, N-Vinylpyridine, Crotonsäure und deren Derivate, wie Ester oder Amide, Vinylidenchlorid, Malein-, Fumar- und Itakonsäure und deren Derivate, wie z. B. Anhydride, Halbester, Ester, Halbamide, Amide, Salze, Vinyläther und Vinylketone.

Für die Herstellung der Polymerisate kann der Anteil der Verbindungen nach Formel II zwischen 1 und 50 Gew.-% schwanken. Vorzugsweise werden die Verbindungen in Mengen zwischen 5 und 20 Gew.-% eingesetzt. Die Polymerisation wird entweder thermisch oder mit üblichen radikalischen Initiatoren ausgelöst. Geeignete Initiatoren sind beispielsweise Wasserstoffperoxid, anorganische Peroxide oder organische Hydroperoxide und Peroxide, in Radikale zerfallende aliphatische Azoverbindungen, Redoxkatalysatorsysteme, wie Systeme mit Persulfat und Ascorbinsäure, Natriumhydrogensulfit oder Eisen-II-Salzen.

Die Initiatoren werden im allgemeinen in einer Menge von 0,05 bis 5 Gew.-%, bezogen auf die Monomermenge, verwendet. Die optimale Menge und der optimal wirksame Initiator lassen sich durch Versuche leicht ermitteln.

Die Polymerisation kann in Substanz durchgeführt werden, man kann jedoch auch in Gegenwart von Lösungs- oder Verdünnungsmitteln arbeiten. Geeignet dafür sind beispielsweise Ester, Alkohole, Ketone; Äther, aliphatische, cycloaliphatische oder aromatische Kohlenwasserstoffe, sowie Formamid und Dimethylformamid. Besonders vorteilhaft wird Wasser als Verdünnungsmittel verwendet. Auch die üblichen Verfahren der Suspensions-, Lösungs- oder Emulsionspolymerisation kommen für die erfindungsgemäßen Polymere in Frage. Bezüglich der ggf. zu verwendenden Polymerisationshilfsmittel, wie Puffersubstanzen, Dispergiermittel, Schutzkolloide, Emulgatoren, Regler sind bei dem erfindungsgemäßen Verfahren zur Polymerisation keine Beschränkungen gegenüber herkömmlichen Verfahren gegeben.

Die Polymerisation kann in einem weiten Temperaturbereich, etwa zwischen 0 und 150°C, vorzugsweise zwischen 40 und 120°C, durchgeführt werden. Man arbeitet im allgemeinen bei Atmosphärendruck, doch können auch niedrigere oder höhere Drücke, beispielsweise bei gasförmigen Monomeren bis zu 3000 bar angewandt werden.

Die erfindungsgemäßen Copolymeren finden Verwendung als härtbare Überzugsmassen, Lacke oder Klebstoffe, als lösungsmittelbständige Bindemittel für Textilprodukte, zur Herstellung von Dichtungsmassen oder zur Herstellung von Formteilen.

Folgende Beispiele dienen zur näheren Erläuterung der Erfindung:

### Beispiel 1

In einem 1-l-Rundkolben mit Blattrührer und Rückflußkühler wurden 136,2 g Vinylacetat, 13,8 g Succinamidsäureallylester und 150,0 g Äthylacetat gemischt und bei 72 bis 75°C unter Zusatz von 0,5 g tert. Butylperpivalat polymerisiert. Nach 3 Stunden war ein Festgehalt der Lösung von 50% und damit voller Umsatz erreicht.

Ein Teil dieser Polymerlösung wurde auf einer Teflonplatte zu einem Film von 0,8 mm Naßdicke ausgestrichen und ergab nach Verdunstung des Äthylacetats einen dehnbaren, zähen Polymerfilm, der in Äthylacetat wieder löslich war. Der K-Wert (nach Fikentscher, Zellulose Chemie 13 (1932) 58) dieses Materials gemessen in einem Gemisch aus 95% Tetrahydrofuran und 5% Wasser bei 25°C, betrug 39,9. Ein weiterer Teil der Polymerlösung von 50 g wurde mit 2,5 g Hexamethoxymethylmelamin (Cymel 300, Cyanamid International Corp.) versetzt, wie beschrieben zu einem Film verarbeitet und 15 Minuten bei 150°C getempert. Nach dieser Behandlung war der Film gegen Äthylacetat beständig, eine 6stündige Extraktion in siedendem Äthylacetat ergab nur noch 9% lösliche Anteile.

### Beispiel 2

In einem 2-l-Rundkolben mit Ankerrührer wurden 210 g destilliertes Wasser, 2,0 g Hydroxyäthylcellulose (Natrosol 250 GR, Hercules GmbH), 4,2 g Nonylphenolpolyglykoläther Arkopal N 100, 4,2 g

Nonylphenolpolyglykoläther Arkopal N 230 (beide Hoechst AG), 0,2 g Natriumdodecylbenzolsulfonat, 0,5 g Vinylsulfonat und 7 mg $(NH_4)_2Fe(SO_4)_2 \cdot 6\ H_2O$ vorgelegt und auf pH 3,5 eingestellt. Anschließend wurden 45 g Vinylacetat und 5 g Adipinamidsäureallylester sowie je 2,5 ml einer 5%igen, wäßrigen Lösung von Ammoniumpersulfat und einer 2,5%igen, wäßrigen Lösung von Rongalit zugegeben, mit Stickstoff gespült und unter Rühren auf 50°C erhitzt. Nach dem Abklingen der Startreaktion wurden innerhalb von 2 Stunden weitere 180 g Vinylacetat im Gemisch mit 20 g Adipinamidsäureallylester gleichmäßig zugegeben. Gleichzeitig wurden mit einer Geschwindigkeit von 5 ml/h während 2,5 Stunden Ammoniumpersulfatlösung und Rongalitlösung zugesetzt. 3 Stunden nach Beginn der Dosierung hatte die entstandene Polymerdispersion einen Festgehalt von 49% erreicht. Die Dispersion hatte eine Viskosität von 341 mPas (Brookfield LtV-Viscosimeter, Spindel Nr. 1, 6 U/Minute).

25 g dieser Dispersion wurden mit 0,625 g Hexamethoxymethylmelamin (vorgelöst in etwas Wasser und Isopropanol) vermischt und zu einem Film von 0,8 mm Naßdicke vergossen. Nach dem Trocknen entstand ein zäher, farbloser Polymerfilm, der 30 Minuten bei 100°C getempert wurde und anschließend nur noch 4% in siedendem Äthylacetat lösliche Anteile aufwies.

## Beispiel 3

In einem 2-l-Rundkolben mit Ankerrührer und Rückflußkühler wurden 250 g destilliertes Wasser und 10 g einer 30%igen wäßrigen Lösung von Mersolat auf 90°C erhitzt, mit Stickstoff gespült und unter Rühren bei pH 3,5 innerhalb von 3 Stunden ein Gemisch aus 410 g Wasser, 5 g 30%ige, wäßrige Mersolatlösung, 4 g $K_2S_2O_8$, 6,8 g Acrylsäure, 371 g Methylmethacrylat, 262 g Butylacrylat und 55,5 g Adipinamidsäureallylester gleichmäßig zugegeben. Dann wurde mit Ammoniak ein pH-Wert von 8 eingestellt und eine weitere Stunde bei 90°C gerührt. Es entstand eine feinteilige Polymerdispersion mit einem Festgehalt von 50,4%. Der K-Wert des Copolymeren, gemessen wie in Beispiel 1, betrug 95.

25 g dieser Dispersion wurden wie in Beispiel 2 mit Hexamethoxymethylmelamin versetzt und 15 Minuten bei 150°C getempert. Der so vernetzte Polymerfilm wies nur noch 4% in siedendem Äthylacetat lösliche Anteile auf.

## Beispiel 4

In einem 2-l-Rundkolben mit Ankerrührer wurden 106 g Wasser, 30 g einer 30%igen, wäßrigen Lösung von Aerosol A 102 (American Cyanamid Comp.) und 15 g Methanol vorgelegt und auf 45°C aufgeheizt. Anschließend wurde unter Rühren (190 U/Minute) bei pH 3,5 eine Emulsion bestehend aus 333 g Wasser, 1,2 g $NaHCO_3$, 30 g 30%ige, wäßrige Aerosol A 102-Lösung, 15 g Methanol, 6 g Acrylsäure, 360 g Vinylacetat, 120 g Vinyllaurat, 120 g Butylacrylat und 24 g N-Methyloladipinamidsäureallylester innerhalb von 3 Stunden gleichmäßig zugegeben. Als Initiator dienten 6 g Ammoniumpersulfat und 3 g Rongalit, die, jeweils gelöst in 30 ml Wasser, gleichzeitig mit der Monomeremulsion zudosiert wurden. Die entstehende Polymerdispersion wies einen Festgehalt von 51% und eine Viskosität von 2100 mPas (Brookfield LTV-Viscosimeter, Spindel Nr. 2, 6 U/Minute) auf und eignete sich als Bindemittel für nichtgewebte Textilien.

Der K-Wert des Copolymeren, gemessen wie in Beispiel 1, betrug 71.

Eine Probe der Dispersion wurde zu einem Film von 0,8 mm Naßdicke ausgestrichen und trocknete zu einem weichen, dehnbaren farblosen Film auf. Dieser Film wurde 5 Minuten lang auf 150°C erhitzt und war danach nur noch zu 7,5% in siedendem Äthylacetat löslich.

## Vergleichsbeispiel

Beispiel 4 wurde wiederholt mit der Änderung, daß anstelle von N-Methyloladipinamidsäureallylester die gleiche Gewichtsmenge N-Methylolacrylamid eingesetzt wurde. Es entstand eine Copolymerdispersion mit sekundären N-Methylolcarbonamidgruppen. Ein wie in Beispiel 4 getemperter Polymerfilm war jedoch noch zu 17% in siedendem Äthylacetat löslich, obwohl, bedingt durch die unterschiedlichen Molekulargewichte der N-Methylolverbindungen, in diesem Copolymeren etwa die doppelte molare Menge an N-Methylolcarbonamidgruppen vorhanden war.

**Patentansprüche für die Vertragsstaaten: BE, CH, DE, FR, GB, IT, NL, SE**

1. Copolymerisate, bestehend aus Monomereinheiten, wie sie durch radikalische Polymerisation von mindestens einem Monomeren aus der Gruppe Olefine, wie Äthylen und Propylen, Acrylsäure, Methacrylsäure sowie deren Ester mit Alkylresten mit bis zu 8 Kohlenstoffatomen, deren Amide oder Nitrile, Styrol sowie substituierte Styrole, Vinylester von Alkylcarbonsäuren mit 1 bis 18 Kohlenstoffatomen, insbesondere Vinylacetat, Vinylhalogenide, insbesondere Vinylchlorid, N-Vinylpyrrolidon, N-Vinylpyridine, Crotonsäure und deren Derivate, wie Ester oder Amide, Vinylidenchlorid, Malein-, Fumar- und Itakonsäure und deren Derivate, Vinyläther und Vinylketone erhalten werden und dadurch gekennzeichnet sind, daß sie Struktureinheiten der allgemeinen Formel I

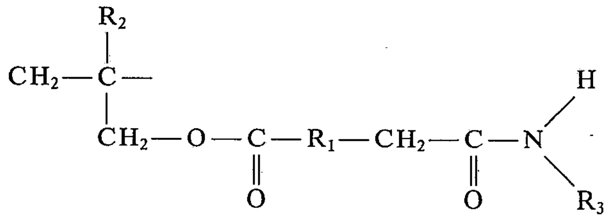

in Mengen von 1 bis 50 Gew.-% enthalten, wobei $R_1$ ein geradkettiger oder verzweigter aliphatischer Kohlenwasserstoffrest mit einer Kohlenstoffzahl von 0 bis 9, $R_2$ ein Wasserstoffrest oder ein Methylrest und $R_3$ ein Wasserstoff oder eine $-CH_2OH$-Gruppe ist und Molekulargewichte zwischen $10^3$ und $10^6$, vorzugsweise $10^4$ bis $10^5$ aufweisen.

2. Copolymerisate nach Anspruch 1, dadurch gekennzeichnet, daß eine oder mehrere der Struktureinheiten der Formel I in Mengen von 5 bis 20 Gew.-% enthalten sind.

3. Verfahren zur Herstellung von Polymerisaten nach Anspruch 1 durch radikalische Polymerisation nach bekannten Verfahren der Masse-, Lösungs-, Fällungs- oder Dispersionspolymerisation bei Temperaturen zwischen 0 und 150°C, dadurch gekennzeichnet, daß Verbindungen der allgemeinen Formel II

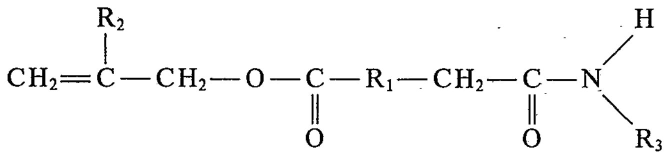

worin $R_1$ ein geradkettiger oder verzweigter aliphatischer Kohlenwasserstoffrest mit einer Kohlenstoffzahl von 0 bis 9, $R_2$ Wasserstoff oder ein Methylrest und $R_3$ Wasserstoff oder eine $-CH_2OH$-Gruppe ist mit mindestens einem weiteren olefinisch ungesättigtem Monomeren copolymerisiert werden.

4. Verwendung der Copolymeren nach Anspruch 1 bis 3 in Überzugsmassen, Lacken, Klebstoffen, Textilausrüstungen, Dichtungsmassen und zur Herstellung von Formteilen.

**Patentansprüche für den Vertragsstaat: AT**

1. Verfahren zur Herstellung von Copolymerisaten mit Molekulargewichten zwischen $10^3$ und $10^6$ durch radikalische Polymerisation nach bekannten Verfahren der Masse-, Lösungs-, Fällungs- oder Dispersionspolymerisation bei Temperaturen zwischen 0 und 150°C von mindestens einem Monomeren aus der Gruppe Olefine, wie Ethylen und Propylen, Acrylsäure, Methacrylsäure sowie deren Ester mit Alkylresten mit bis zu 8 Kohlenstoffatomen, deren Amide oder Nitrile, Styrol sowie substituierte Styrole, Vinylester von Alkylcarbonsäuren mit 1 bis 18 Kohlenstoffatomen, insbesondere Vinylacetat, Vinylhalogenide, insbesondere Vinylchlorid, N-Vinylpyrrolidon, N-Vinylpyridine, Crotonsäure und deren Derivate, wie Ester oder Amide, Vinylidenchlorid, Malein-, Fumar- und Itakonsäure und deren Derivate, Vinylether und Vinylketone, dadurch gekennzeichnet, daß Verbindungen der allgemeinen Formel II

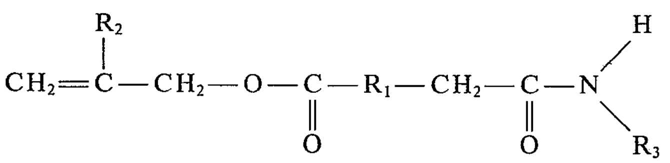

worin $R_1$ ein geradkettiger oder verzweigter aliphatischer Kohlenwasserstoffrest mit einer Kohlenstoffzahl von 0 bis 9, $R_2$ Wasserstoff oder ein Methylrest und $R_3$ Wasserstoff oder eine $-CH_2OH$-Gruppe ist, in Mengen von 1 bis 50 Gew.-%, bezogen auf Monomere, mit mindestens einem der weiteren olefinisch ungesättigten Monomeren copolymerisiert werden.

2. Verfahren nach Anspruch 1, dadurch gekennzeichnet, daß eine oder mehrere der Verbindungen der Formel II in Mengen von 5 bis 20 Gew.-% einpolymerisiert werden.

3. Verwendung der nach den Ansprüchen 1 oder 2 hergestellten Copolymerisate in Überzugsmassen, Lacken, Klebstoffen, Textilausrüstungen, Dichtungsmassen und zur Herstellung von Formteilen.

**Claims for the Contracting States: BE, CH, DE, FR, GB, IT, NL, SE**

1. Copolymers consisting of monomer units obtained by the radical polymerization of at least one monomer selected from the group consisting of olefins, such as ethylene and propylene, acrylic acid, methacrylic acid and esters thereof with alkyl radicals having up to 8 carbon atoms, amides or nitriles thereof, styrene and substituted styrenes, vinyl etsters of alkylcarboxylic acids having from 1 to 18 carbon atoms, especially vinyl acetate, vinyl halides, especially vinyl chloride, N-vinylpyrrolidone, N-vinylpyridine, crotonic acid and derivatives thereof, such as esters or amides, vinylidene chloride, maleic, fumaric and itaconic acid and derivatives thereof, vinyl ethers and vinyl ketones, and characterized in that they contain structural units of the general formula I

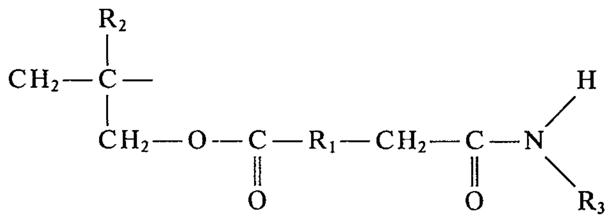

in amounts of from 1 to 50% by weight,
in which

$R_1$ represents a straight-chain or branched aliphatic hydrocarbon radical having from 0 to 9 carbon atoms,
$R_2$ represents a hydrogen radical or a methyl radical, and
$R_3$ represents hydrogen or a $-CH_2OH$ group,

and have molecular weights of between $10^3$ and $10^6$, preferably between $10^4$ and $10^5$.

2. Copolymers according to claim 1, characterized in that one or more of the structural units of the formula I are contained therein in quantities of between 5 and 20% by weight.

3. Process for the manufacture of polymers according to claim 1 by radical polymerization according to known techniques of bulk, solution, precipitation or dispersion polymerization at temperatures between 0 and 150° C, characterized in that compounds of the general formula II

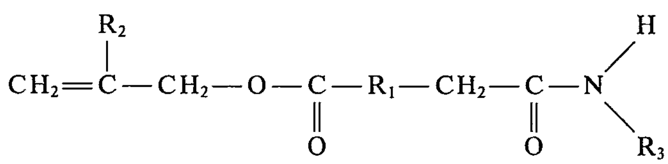

in which

$R_1$ represents a straight-chain or branched aliphatic hydrocarbon radical having from 0 to 9 carbon atoms,
$R_2$ represents hydrogen or a methyl radical, and
$R_3$ represents hydrogen or a $-CH_2OH$ group

are copolymerized with at least one other olefinically unsaturated monomer.

4. Use of the copolymers according to claims 1 to 3 in coating compositions, lacquers, adhesives, textile finishing, sealants and in the manufacture of shaped articles.

**Claims for the Contracting State: AT**

1. Process for the manufacture of copolymers having molecular weights of between $10^3$ and $10^6$ by radical polymerization according to known techniques of bulk, solution, precipitation or dispersion polymerization at temperatures of between 0 and 150°C of at least one monomer selected from the group consisting of olefins, such as ethylene and propylene, acrylic acid, methacrylic acid and esters thereof with alkyl radicals having up to 8 carbon atoms, amides or nitriles thereof, styrene and substituted styrenes, vinyl esters of alkylcarboxylic acids having from 1 to 18 carbon atoms, especially vinyl acetate, vinyl halides, especially vinyl chloride, N-vinylpyrrolidone, N-vinylpyridine, crotonic acid and derivatives thereof, such as esters or amides, vinylidene chloride, maleic, fumaric and itaconic

acid and derivatives thereof, vinyl ethers and vinyl ketones, characterized in that compounds of the general formula II

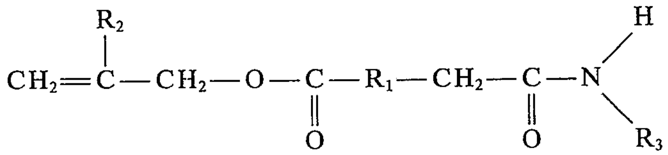

in which

$R_1$ represents a straight-chain or branched aliphatic hydrocarbon redical having from 0 to 9 carbon atoms,
$R_2$ represents hydrogen or a methyl radical, and
$R_3$ represents hydrogen or a $-CH_2OH$ group,

in amounts of from 1 to 50% by weight, based on the monomers, are copolymerized with at least one other olefinically unsaturated monomer.

2. Process according to claim 1, characterized in that one or more compounds of the formula II are polymerized in quantities of between 5 and 20% weight.

3. Use of the copolymers produced according to claim 1 or 2 in coating compositions, lacquers, adhesives, textile finishing, sealants and in the manufacture of shaped articles.

**Revendications pour les Etats contractants: BE, CH, DE, FR, GB, IT, NL, SE**

1. Copolymères constitués de motifs monomères tels qu'ils sont obtenus par polymérisation radicalaire d'au moins un monomère pris dans l'ensemble constitué par les oléfines, telles que l'éthylène et le propylène, les acides acrylique et méthacrylique ainsi que leurs esters à radicaux alkyles contenant au plus 8 atomes de carbone, leurs amides et leurs nitriles, le styrène et les styrènes substitués, les esters vinyliques d'acides alcanoiques contenant de 1 à 18 atomes de carbone, plus spécialement l'acétate de vinyle, les halogénures de vinyle, plus spécialement le chlorure de vinyle, la N-vinylpyrrolidone, les N-vinyl-pyridines, l'acide crotonique et ses dérivés, tels que ses esters et ses amides, le chlorure de vinylidène, les acides maléique, fumarique et itaconique et leurs dérivés, les éthers vinyliques et les vinyl-cétones, copolymères caractérisés en ce qu'ils contiennent, en une proportion de 1 à 50% en poids, des motifs répondant à la formule générale I:

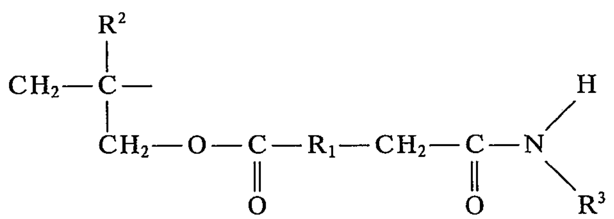

(I)

dans laquelle $R^1$ représente un radical hydrocarboné aliphatique, linéaire ou ramifié, qui contient de 0 à 9 atomes de carbone, $R^2$ représente l'hydrogène ou un radical méthyle et $R^3$ représente l'hydrogène ou un radical $-CH_2OH_3$, et en ce qu'ils ont des poids moléculaires compris entre $10^3$ et $10^6$, de préférence entre $10^4$ et $10^5$.

2. Copolymères selon la revendication 1, caractérisés en ce qu'ils contiennent un ou plusieurs des motifs de formule I en des quantités de 5 à 20% en poids.

3. Procédé de préparation de polymères selon la revendication 1 par polymérisation redicalaire effectuée selon les méthodes connues de la polymérisation en masse, en solution, avec précipitation ou en dispersion, à des températures comprises entre 0 et 150°C, procédé caractérisé en ce qu'on copolymérise des composés répondant à la formule générale II:

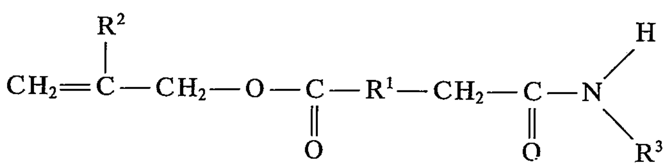

ans laquelle $R^1$ représente un radical hydrocarboné aliphatique, linéaire ou ramifié, contenant de 0 à 9 atomes de carbone, $R^2$ représente l'hydrogène ou un radical méthyle et $R^3$ l'hydrogène ou un radical $-CH_2OH$, avec au moins un autre monomère éthylénique.

4. Application des copolymères selon l'une des revendications 1 à 3 dans des matières pour revêtements, des vernis, des colles, des produits pour l'ennoblissement de textiles et des matières pour étanchéification ainsi que pour la fabrication d'objets moulés.

**Revendications pour l'Etat contractant: AT**

1. Procédé de préparation de copolymères ayant des poids moléculaires compris entre $10^3$ et $10^6$ par polymérisation radicalaire, effectuée selon les méthodes connues de la polymérisation en masse, en solution, avec précipitation ou en dispersion à des températures comprises entre 0 et 150°C, d'au moins un monomère pris dans l'ensemble constitué par les oléfines, telles que l'éthylène et le propylène, les acides acrylique et méthacrylique ainsi que leurs esters à radicaux alkyles contenant au plus 8 atomes de carbone, leurs amides et leurs nitriles, le styrène et les styrènes substitués, les esters vinyliques d'acides alcanoiques contenant de 1 à 18 atomes de carbone, plus spécialement l'acétate de vinyle, les halogénures de vinyle, plus spécialement le chlorure de vinyle, la N-vinyl-pyrrolidone, les N-vinyl-pyridines, l'acide crotonique et ses dérivés, tels que ses esters et ses amides, le chlorure de vinylidène, les acides maléique, fumarique et itaconique et leurs dérivés les éthers vinyliques et les vinylcétones, procédé caractérisé en ce qu'on copolymérise des composés répondant à la formule générale II:

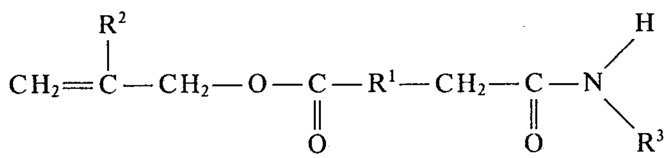

(II)

dans laquelle $R^1$ représente un radical hydrocarboné aliphatique, linéaire ou ramifié, contenant de 0 à 9 atomes de carbone, $R^2$ représente l'hydrogène ou un radical méthyle et $R^3$ représente l'hydrogène ou un radical $-CH_2OH$, en des quantités de 1 à 50% en poids par rapport au monomère, avec au moins un des autres monomères éthyléniques.

2. Procédé selon la revendication 1, caractérisé en ce qu'on introduit par polymérisation un ou plusieurs des composés de formule II en des quantités de 5 à 20% en poids.

3. Application des copolymères préparés selon l'une des revendications 1 et 2 dans des matières pour revêtements, des vernis, des colles, des produits pour l'ennoblissement de textiles et des matières pour étanchéification, et pour la fabrication d'objets moulés.